## Europäisches Patentamt

## European Patent Office

## Office européen des brevets

(19)

(11) Veröffentlichungsnummer: **0 226 054**
**B1**

(12) # EUROPÄISCHE PATENTSCHRIFT

(45) Veröffentlichungstag der Patentschrift:
31.01.90

(51) Int. Cl.⁴: **H04J 3/06**, H04J 3/08

(21) Anmeldenummer: 86115839.2

(22) Anmeldetag: 14.11.86

(54) Digitalsignalverteiler.

(30) Priorität: 18.11.85 DE 3540865

(43) Veröffentlichungstag der Anmeldung:
24.06.87 Patentblatt 87/26

(45) Bekanntmachung des Hinweises auf die Patenterteilung:
31.01.90 Patentblatt 90/5

(84) Benannte Vertragsstaaten:
AT BE CH DE ES FR GB GR IT LI NL SE

(56) Entgegenhaltungen:
FR-A- 2 269 248

COMMUTATION & TRANSMISSION, Band 5, Nr. 3,
September 1983, Seiten 39-52, Issy-les-Moulineaux, FR;
A. HURIAU et al.: "Interface des faisceaux hertziens
avec le réseau numérique de télécommunications"
P.R. GERKE: "Neue Kommunikationsnetze Prinzipien,
Einrichtungen, Systeme", 1982, Seiten 43-81,
Springer-Verlag, Berlin, DE
TELCOM REPORT 2 BEIHEFT
"DIGITAL-ÜBERTRAGUNGSTECHNIK", 1979,
Seiten 59-64, München, DE; F. BEKERT et al.:
"Digitalsignal-multiplexgeräte DSMX2/8,
DSMX 8/34 und DSMX34/139"
PROSPEKT VON "SIEMENS AG", Bestell-Nr.
S42023-A750-A1-1-29, Seiten 1-12, Siemens AG,
München, DE; "Digitalsignal-Kanalverteiler DKVt2"

(73) Patentinhaber: **Siemens Aktiengesellschaft,
Wittelsbacherplatz 2, D-8000 München 2(DE)**

(72) Erfinder: **Sonntag, Fritz, Dipl.-Ing.,
Schwetzingenstrasse 12, D-8000 München 60(DE)**
Erfinder: **Breitfelder, Peter, Dipl.-Ing., Enzianring 40,
D-8028 Taufkirchen(DE)**

## Beschreibung

Die Erfindung bezieht sich auf einen Verteiler mit Verteilersteuerung zum Durchschalten von Digitalsignalen.

Aus einem Prospekt der Fa. Digital Switch Corporation, 707 East Arapaho Road, Richardson, Texas, 75083-0911 ist ein digital cross-connect system (DEXCS1) bekannt. Dieses enthält ein Koppelfeld, dem DS3-Signale einer Bitrate von 45 Mbit/s zugeführt und entnommen werden.

Aus dem Buch "Neue Kommunikationsnetze - Prinzipien, Einrichtungen, Systeme", Gerke, Springer-Verlag, Berlin, Heidelberg, New York, 1982, Seiten 43 bis 81 sind ebenfalls Koppeleinrichtungen bekannt. Auf der Seite 71 ist eine serielle Durchschaltung über ein Koppelfeld und eine parallele Durchschaltung über mehrere Koppelfelder bei synchronem Betrieb gezeigt.

Nach einem älteren Vorschlag (P 35 11 352.9) werden plesiochrone Breitband-Digitalsignale zwischen den Eingängen und Ausgängen einer Koppeleinrichtung von einem zentralen Takt gesteuert mittels Positiv-Stopfverfahren übertragen (siehe auch Dokument FR-A 2 269 248, welches ein Übertragungsverfahren bei plesiochronem Betrieb zeigt).

In der "Nachrichtentechnische Zeitschrift" ntz, 36 (1983) Heft 3, Seiten 168 -173 ist die europäische Multiplex-Hierarchie mit Bitraten von 2,048 Mbit/s, 8,448 Mbit/s, 34,368 Mbit/s, 139,264 Mbit/s und 564,992 Mbit/s und sind Digital-Multiplexgeräte beschrieben.

In der amerikanischen Hierarchie sind Hierarchiestufen mit Bitraten von 1,544 Mbit/s (DS1), 3,152 Mbit/s (DS1C), 6,312 Mbit/s (DS2), 44,736 Mbit/s (DS3) und 274,176 Mbit/s (DS4) vorgesehen. Für Bitratenwerte von Hierarchiestufen werden häufig auf- oder abgerundete Werte angegeben.

In der digitalen Übertragungstechnik sind den Multiplexern manuelle Verteiler nachgeschaltet, über die die Datenströme auf die zum Zielort führenden Leitungen rangiert werden. Elektronische Verteiler (Koppelfelder) haben diesen gegenüber die Vorteile der Fernsteuerbarkeit und der schnellen Unschaltmöglichkeit durch automatische Wegesuche im Koppelfeld sowohl während des Betriebs als auch im Störungsfall.

Da Multiplex- und Koppelfeldeinrichtungen jeweils Eingangs- und Ausgangsschnittstellen benötigen, ist das Ersetzen von manuellen Verteilern durch elektronische Koppelfelder sehr unwirtschaftlich.

Aufgabe der Erfindung ist es, eine wenig aufwendige und wirtschaftliche Lösung für elektronische Koppelfelder im Zusammenwirken mit Multiplexgeräten anzugeben.

Diese Aufgabe wird erfindungsgemäß dadurch gelöst, daß mehrere gleiche, zentralgetaktete Teilkoppelfelder vorgesehen sind, deren Anzahl dem Vervielfachungsfaktor von einer ausgewählten höheren zu einer ausgewählten niederen Hierarchiestufe entspricht, deren Eingänge als erste Verteilereingänge und deren Ausgänge als erste Verteilerausgänge dienen und bei denen alle Eingänge gleicher Position eine Eingangsgruppe und alle Ausgänge gleicher Position eine Ausgangsgruppe bilden, daß wenigstens einer Eingangsgruppe ein Demultiplexer vorgeschaltet ist, dessen Eingang einen zweiten Verteilereingang bildet, und daß wenigstens einer Ausgangsgruppe ein Multiplexer nachgeschaltet ist, dessen Ausgang einen zweiten Verteilerausgang bildet.

Vorteilhaft ist es dabei, wenn der Demultiplexer zum Umsetzen eines Digitalsignals einer höheren Hierarchiestufe in Digitalsignale ausgebildet ist, deren Bitrate sich durch Division der Bitrate des Digitalsignals der höheren Hierarchiestufe durch die Anzahl der Teilkoppelfelder ergibt, und wenn der Multiplexer eine entsprechende Rückumsetzung vornimmt, oder wenn der Demultiplexer zum Umsetzen eines Digitalsignals der höheren Hierarchiestufe in Digitalsignale einer niederen Hierarchiestufe ausgebildet ist und wenn der Multiplexer eine entsprechende Rückumsetzung vornimmt.

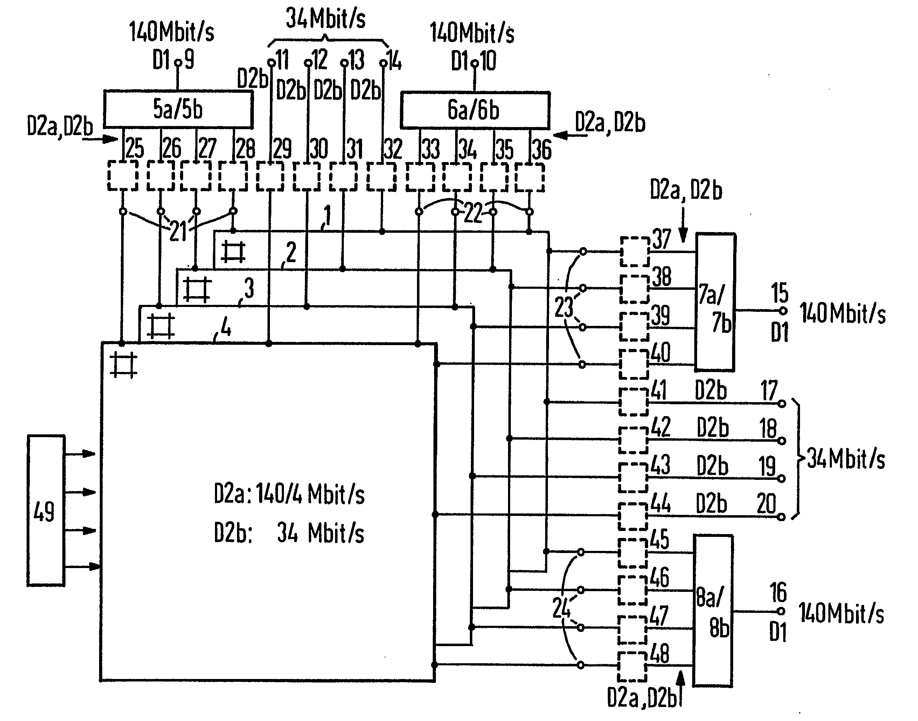

Die Figur zeigt einen erfindungsgemäßen Verteiler mit einem aus vier Teilkoppelfeldern 1-4 bestehendem Koppelfeld. Die Anordnung enthält weiter Demultiplexer 5a bzw. 5b und 6a bzw. 6b, die ausgangsseitig mit Eingangsgruppen 21 und 22 des Koppelfeldes 1-4 verbinden sind, wobei diese aus jweeils einem Eingang in gleicher Position an jedem Teilkoppelfeld 1-4 bestehen. An entsprechende Ausgangsgruppen 23,24 sind Multiplexer 7a bzw. 7b und 8a bzw. 8b angeschlossen.

Bei einer ersten Variante sind Demultiplexer 5a und 6a vorgesehen, die ein 140-Mbit/s-Signal D1 in vier 140/4-Mbit/s-Signale D2a umsetzen. Entsprechend setzen die Multiplexer 7a und 8a vier 140/4-Mbit/s-Signale D2a in ein 140-Mbit/s-Signale D1 um. Die Eingänge 11-14 und 17-20 werden in diesem Falle nicht benützt.

Bei einer zweiten Variante Demultiplexer 5b und 6b ein 140-Mbit/s-Signale D1 in vier 34-Mbit/s-Signale D2b um und die Multiplexer 7b und 8b nehmen eine entsprechende Rückumsetzung vor. In diesem Fall Können an den ersten Verteilereingängen 11-14 und den ersten Verteilerausgängen 17-20 34-Mbit/s-Signale D2b eingespeist oder entnommen werden.

Bei plesiochronem Betrieb sind noch Stopfeinrichtungen 25-36 und Entstopfeinrichtungen 37-48 einzufügen. Bei einem Betrieb der ersten Variante kann beispielsweise ein am Verteilereingang 9 anliegendes 140-Mbit/s-Signale D1 entweder zum Verteilerausgang 15 oder zum Verteilerausgang 16 durchgeschaltet werden. Außerdem können beispielsweise zwei der 140/4-Mbit/s-Signale D2a dem Multiplexer 7a und die restlichen 140/4-Mbit/s-Signale D2a dem Multiplexer 8a zugeführt werden. Die an diesen Multiplexern noch freien Eingänge können dann beispielsweise mit 140/4-Mbit/s-Signalen D2a des 140-Mbit/s-Signals D1 am Verteilereingang 10 belegt werden.

Bei der zweiten Variante werden im Koppelfeld 1-4 34-Mbit/s-Signale D2b durchgeschaltet. Dies bedeutet, daß auch einzelne 34-Mbit/s-Signale D2b an den Verteilereingängen 11-14 in das Koppelfeld 1-4 eingespeist oder an den Verteilerausgängen 17-20 entnommen werden. Ein 34-Mbit/s-Signale D2b kann beispielsweise vom Verteilereingang 11 zum Verteilerausgang 20 gelangen. Es kann aber ebensogut einem Eingang des Multiplexers 7b oder 8b zugefürt werden. Ebenso kann ein aus dem Demultiplexer 5b stammende 34-Mbit/s-Signale D2b dem Verteilerausgang 18 zugeführt werden.

Bei einer dritten Variante können die erste und zweite Variante gemeinsam auftreten. Es sind somit Demultiplexer 5a und 5b bzw. 6a und 6b vorgesehen, die die 140-Mbit/s-Signale D1 in vier 140/4-Mbit/s-Signale D2a bzw. vier 34-Mbit/s-Signale D2b umsetzen und in den entsprechenden Multiplexern 7a und 7b bzw. 8a und 8b rückumsetzen. Dabei ist durch entsprechende Steuerung des Koppelfeldes 1-4 sichergestellt, daß 140/4-Mbit/s-Signale D2a und 34 Mbit/s-Signale D2b nicht ein und demselben Multiplexer zugeführt werden.

Prinzipiell kann diese Anordnung auch bei anderen Bitraten verwendet werden, beispielsweise

| 8 | Mbit/s | → | 4 × | 2 | Mbit/s |
| 34 | Mbit/s | → | 4 × | 8 | Mbit/s |
| 565 | Mbit/s | → | 4 × | 140 | Mbit/s |

Diese Teilsignale würden auch jeweils vier Teilkoppelfelder benötigen.

## Patentansprüche

1. Verteiler mit koppelfeld und Verteilersteuerung (49) zum Durchschalten von Digitalsignalen (D1), dadurch gekennzeichnet, daß mehrere gleiche, zentralgetaktete Teilkoppelfelder (1-4) vorgesehen sind, deren Anzahl dem Vervielfachungsfaktor vone einer ausgewählten höheren zu einer ausgewählten niederen Hierarchiestufe entspricht, deren Eingänge als erste Verteilereingänge (11-14) und deren Ausgänge als erste Verteilerausgänge (17-20) dienen und bei denen alle Eingänge gleicher Position eine Eingangsgruppe (21,22) und alle Ausgänge gleicher Position eine Ausgangsgruppe (23,24) bilden, daß wenigstens einer Eingangsgruppe (21,22) ein Demultiplexer (5a,6a;5b,6b) vorgeschaltet ist, dessen Eingang einen zweiten Verteilereingang (9,10) bildet, und daß wenigstens einer Ausgangsgruppe (23,24) ein Multiplexer (7a,8a;7b,8b) nachgeschaltet ist, dessen Ausgang einen zweiten Verteilerausgang (15,16) bildet.

2. Verteiler nach Anspruch 1, dadurch gekennzeichnet, daß der Demultiplexer (5a,5b) zum Umsetzen eines Digitalsignales (D1) einer höheren Hierarchiestufe in Digitalsignale (D2a) ausgebildet ist, deren Bitrate sich durch Division der Bitrate des Digitalsignals (D1) der bestimmten höheren Hierarchiestufe durch die Anzahl der Teilkoppelfelder (1-4) ergibt, und daß der Multiplexer (7a,8a) eine entsprechende Rückumsetzung vornimmt.

3. Verteiler nach Anspruch 1, dadurch gekennzeichnet, daß der Demultiplexer (5b,6b) zum Umsetzen eines Digitalsignals (D1) der höheren Hierarchiestufe in Digitalsignale (D2b) einer niederen Hierarchiestufe ausgebildet ist und daß der Multiplexer (7b,8b) eine entsprechende Rückumsetzung vornimmt.

4. Verteiler nach einem der vorhergehenden Ansprüche zum Durchschalten von plesiochronen Digitalsignalen, dadurch gekennzeichnet, daß allen Eingängen (11-14) und Eingangsgruppen (21,22) der Teilkoppelfelder (1-4) Stopfeinrichtungen (25-36) vorgeschaltet sind und daß allen Ausgängen (17-20) und Ausgangsgruppen (23,24) der Teilkoppelfelder (1-4) Entstopfeinrichtungen (37-48) nachgeschaltet sind.

## Claims

1. Distributor with switching matrix and distributor control (49) for the switching-through of digital signals (D1), characterized in that a plurality of identical, centrally clocked component switching matrices (1–4) are provided, the number of which corresponds to the multiplication factor of a selected higher hierarchical level to a selected lower hierarchical level, the inputs of which serve as first distributor inputs (11–14) and the outputs of which serve as first distributor outputs (17–20) and with which all inputs of the same position form an input group (21, 22) and all outputs of the same position form an output group (23, 24), in that at least one input group (21, 22) is preceded by a demultiplexer (5a, 6a; 5b, 6b), the input of which forms a second distributor input (9, 10), and in that at least one output group (23, 24) is followed by a multiplexer (7a, 8a; 7b, 8b), the output of which forms a second distributor output (15, 16).

2. Distributor according to claim 1, characterized in that the demultiplexer (5a, 5b) is designed for the converting of a digital signal (D1) of a higher hierarchical level into digital signals (D2a) of which the bit rate is obtained by division of the bit rate of the digital signal (D1) of the particular higher hierarchical level by the number of component switching matrices (1–4), and in that the multiplexer (7a, 8a) performs a corresponding reconversion.

3. Distributor according to claim 1, characterized in that the demultiplexer (5b, 6b) is designed for the converting of a digital signal (D1) of the higher hierarchical level into digital signals (D2b) of a lower hierarchical level and in that the multiplexer (7b, 8b) performs a corresponding reconversion.

4. Distributor according to one of the preceding claims for the switching-through of plesiochronous digital signals, characterized in that all inputs (11–14) and input groups (21, 22) of the component switching matrices (1–4) are preceded by stuffing devices (25–36) and in that all outputs (17–20) and output groups (23, 24) of the component switching matrices (1–4) are followed by destuffing devices (37–48).

## Revendications

1. Répartiteur comportant un champ de couplage et un dispositif (49) de commande du répartiteur, pour la transmission directe de signaux numériques (D1), caractérisé par le fait qu'il est prévu plusieurs champs de couplage partiels identiques (1–4) commandés de façon cadencée d'une manière centralisée et dont le nombre correspond au facteur de multiplication d'un niveau hiérarchique supérieur sélectionné à un niveau hiérarchique inférieur sélectionné et dont les entrées sont utilisées comme premières entrées (11–14) du répartiteur et dont les sorties sont utilisées comme premières sorties (17–20) du répartiteur, et dans lesquels toutes les entrées correspondant à une même position forment un groupe d'entrées (21, 22) et toutes les sorties correspondant à une même position forment un groupe de sorties (23, 24), qu'en amont d'au moins un groupe d'entrées (21, 22) est branché un démultiplexeur (5a, 6a; 5b, 6b), dont l'entrée constitue une seconde entrée (9, 10) du répartiteur et qu'en aval d'au moins un groupe de sorties (23, 24) est branché un multiplexeur (7a, 8a; 7b, 8b), dont la sortie constitue une seconde sortie (15, 16) du répartiteur.

2. Répartiteur suivant la revendication 1, caractérisé par le fait que le multiplexeur (5a, 5b) est agencé de manière à convertir un signal numérique (D1) d'un niveau hiérarchique supérieur en des signaux numériques (D2a), dont le débit binaire est obtenu par division du débit binaire du signal numérique (D1) du niveau hiérarchique supérieur déterminé par le nombre des champs de couplage partiels (1–4), et que le multiplexeur (7a, 8a) réalise une conversion inverse correspondante.

3. Répartiteur suivant la revendication 1, caractérisé par le fait que le démultiplexeur (5b, 6b) est agencé de manière à réaliser la conversion d'un signal numérique (D1) du niveau hiérarchique supérieur en des signaux numériques (D2b) d'un niveau hiérarchique inférieur et que le multiplexeur (7b, 8b) réalise une conversion inverse correspondante.

4. Répartiteur suivant l'une des revendications précédentes pour la transmission directe de signaux numériques plésiochrones, caractérisé par le fait que des dispositifs de bourrage (25–36) sont branchés en amont de toutes les entrées (11–14) et de tous les groupes d'entrées (21, 22) des champs de couplage partiels (1–4), et que des dispositifs (37–48) de suppression du bourrage sont branchés en aval de toutes les sorties (17–20) et de tous les groupes de sortie (23, 24) des champs de couplage partiels (1–4).